(19) Europäisches Patentamt
European Patent Office
Office européen des brevets

(11) **EP 3 419 212 B1**

(12) **EUROPEAN PATENT SPECIFICATION**

(45) Date of publication and mention
of the grant of the patent:
**11.03.2020 Bulletin 2020/11**

(51) Int Cl.:
***H04L 9/06*** (2006.01)

(21) Application number: **17177625.5**

(22) Date of filing: **23.06.2017**

(54) **COMPUTER IMPLEMENTED METHOD, COMPUTER SYSTEM AND COMPUTER READABLE COMPUTER PROGRAM PRODUCT**

COMPUTERIMPLEMENTIERTES VERFAHREN, COMPUTERSYSTEM UND COMPUTERLESBARES COMPUTERPROGRAMMPRODUKT

PROCÉDÉ INFORMATIQUE, SYSTÈME INFORMATIQUE ET PRODUIT DE PROGRAMME INFORMATIQUE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.12.2018 Bulletin 2018/52**

(73) Proprietor: **Vestel Elektronik Sanayi ve Ticaret A.S.
45030 Manisa (TR)**

(72) Inventor: **PAMIR, Meksel Ugur
45030 Manisa (TR)**

(74) Representative: **Ascherl, Andreas et al
KEHL, ASCHERL, LIEBHOFF & ETTMAYR
Patentanwälte - Partnerschaft
Emil-Riedel-Strasse 18
80538 München (DE)**

(56) References cited:
**US-A1- 2002 051 537**

• **"Chapter 9: ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383 , 1 October 1996 (1996-10-01), XP001525009, ISBN: 978-0-8493-8523-0 Retrieved from the Internet: URL:http://www.cacr.math.uwaterloo.ca/hac/**
• **JIAN GUO ET AL: "The PHOTON Family of Lightweight Hash Functions", 14 August 2011 (2011-08-14), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 222 - 239, XP019161007, ISSN: 0302-9743 ISBN: 978-3-642-35622-3 * pages 230-232 ***
• **AUMASSON JEAN-PHILIPPE ET AL: "Quark: A Lightweight Hash", 17 August 2010 (2010-08-17), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 1 - 15, XP047270429, ISSN: 0302-9743 ISBN: 978-3-642-35622-3 * pages 2-5 ***

## Description

### TECHNICAL FIELD

The invention relates to a computer implemented method. Further, the invention relates to a computer system and computer readable computer program product.

### BACKGROUND OF THE INVENTION

Although applicable to any electronic system, the present invention will mainly be described in conjunction with electronic networks and sensitive data that must be protected in the electronic networks.

Sensitive data may be protected in various ways in computer networks. One possibility is to encrypt data prior to transmitting the data over the network. A possible implementation of such an encryption is the RSA algorithm. RSA is an asymmetric encryption algorithm that can be used both for encryption/decryption and for digital signatures. It uses key pairs consisting in a private key, which is used for decrypting or signing data, and a public key, which is used for encrypting and examining signatures. The private key is kept secret and can only be calculated from the public key with extremely high effort, if at all.

Keys and messages are represented as numbers and both the determination of the key pairs and the encryption/decryption or the signature of messages are mathematical operations. The fact that the private key is kept secret is based on the founded mathematical assumption that prime factorization is, as a rule, a difficult problem and that, in particular, the factorization of N in its prime factors P and Q is practically impossible.

Asymmetric cryptography deals with the concrete problem of how to safely exchange electronic messages and at the same time facilitate the exchange of keys and secrecy. In contrast to symmetric cryptography, when asymmetric cryptography is used, each user of the system only has to keep his own private key secret.

The asymmetric RSA algorithm is e.g. explained in the document EP1504337 (B1).

Another method to protect data in an electronic network is to use hash values and not transmit the data at all. If for example a user wants to log into a computer system via a network the password entered by the user may be transmitted to the server. However, it is also possible to calculate a hash value on the user's computer and transfer the hash value to the server.

A cryptographic hash function that may be used to calculate a hash value is a function that has certain properties which make it suitable for use in cryptography. It is a mathematical algorithm that maps data of arbitrary size to a bit string of a fixed size (the hash value) which also is a one-way function. Such a one-way function is a function which is infeasible to invert. The server will then also calculate the hash on the password that is known to the server or simply compare the received hash value to a pre-calculated and stored hash value for the password. Hash functions may also serve to generate message integrity codes or as helper functions in digital signature schemes, like RSA signatures.

There exist a variety of hash algorithms that are computationally intensive. An exemplary list of such algorithms includes:

| Method | Rom | Ram | Cycle* |
|---|---|---|---|
| MD5 | 844 | 144 | 2813 |
| HMAC-MD5 | 1 062 | 248 | 12 845 |
| SHA-1 | 728 | 148 | 5 785 |
| HMAC-SHA-1 | 946 | 248 | 20 699 |
| SHA-256 / SHA-224 | 1 040 | 188 | 5 835 |
| HMAC-SHA-256/224 | 1 476 | 272 | 24 879 |
| SHA-512 / SHA-384 | 2 012 | 304 | 18 226 |
| HMAC-SHA-512/384 | 2 448 | 496 | 76 439 |
| *Arm M3 - 50 character message | | | |

The exemplary values for the needed computation cycles are provided for an ARM M3 processing core. Such relatively small processing cores are widely used in internet of things or IoT devices that are connected to a computer network.

Highly complex algorithms will therefore require a huge amount of processing cycles in such a processing core.

Accordingly, there is a need for an improved method for generating hash values with reduced computational effort.

"Chapter 9" of the Handbook of applied cryptography discloses the MD4 has algorithm. "The PHOTON family of lightweight hash functions" by Jian Guo discloses a family of hash functions for constrained devices, like RFID tags. Document US 2002 / 0 051 537 A1 discloses a parallelizable variable-input length pseudorandom function. In "Quark: A Lightweight Hash" by Aumasson Jean-Phillipe et al. a lightweight cryptographic hash function is disclosed.

## SUMMARY OF THE INVENTION

The present invention provides a computer implemented method with the features of claim 1, a computer system with the features of claim 8 and a computer readable computer program product with the features of claim 9.

The computer implemented method of the present invention allows calculating a hash value for an input message with a two-step approach.

The first step of the two-step approach is a kind of preparation phase. In this first step the computation variables that are later needed for computing the hash value are preloaded.

Preloading refers to initializing the computation variables with values that may e.g. be based on a predefined arbitrary number. The predefined arbitrary number may e.g. be directly assigned to the respective computation variables or further computations may be performed based on the predefined arbitrary number, the results being assigned to the computation variables.

In the second step of the two-step approach, the actual computation of the hash value for the input message is performed. The hash value is calculated based on the input message and the preloaded computation variables. This step makes use of the fact that in processors integer overflows occur when an arithmetic operation attempts to create a numeric value that is outside of the range that can be represented with a given number of bits. Usually such a value will be larger than the maximum representable value. The resulting value may e.g. comprise only the part that fits into the respective variable. If for example a computation results in a 9-bit value only the lower eight bits may be stored in an 8-bit variable.

By using preloaded computation variables and deliberately causing integer overflows an irreversible complexation, i.e. hash value calculation, may be performed for the input message with only little computational effort.

As indicated above, possible applications of the present invention may be found in any system that requires the computation of a hash value, like e.g. a login to servers, message authentication. Further hash values may be used in key derivation schemes and the like.

Because of the reduced computational effort, the present invention may be especially beneficial for low power processors, like e.g. usually used in IoT devices.

Compared to the above mentioned algorithms, the algorithm according to the present invention (IrCoMe: Irreversible Complexity Method) only requires a reduced amount of Rom and Ram memory. Further, the algorithm only requires 6300 cycles on the exemplary processing architecture.

| Method | Rom | Ram | Cycle* |
|--------|-----|-----|--------|
| IrCoMe | 100 | 10  | 6300   |

Further embodiments of the present invention are subject of the further subclaims and of the following description, referring to the drawings.

In an embodiment, preloading may comprise initializing a first element of an output buffer for the hash value with the predefined arbitrary number and initializing the further elements of the output buffer based on the value of the first element of the output buffer and initializing a unique number variable with a unique number.

The first element of the output buffer will serve as a starting point, i.e. as the basis, for filling the output buffer with unique values. The output buffer may be chosen of any size as required by the respective application. It is understood, that the chances of producing identical hash values for different inputs is decreased by increasing the size of the output buffer. Therefore, the output buffer may e.g. be chosen to be more than 10, e.g. 15 or 20, elements long. It is understood, that after performing the computations the output buffer will hold the calculated hash value.

The unique number variable will serve as a kind of temporary variable in the second step of calculating the hash value.

In an embodiment, preloading may comprise initializing an input position pointer with half the size of the input message and initializing an output position pointer with half the size of the output buffer and initializing a loop counter with the summed value of the size of the input message and size of the output buffer multiplied by a multiplication factor.

For example the input message may be 100 elements long and the output buffer may be 20 elements long.

The input position pointer will then be initialized with 100/2=50 and the output position pointer will be initialized with 20/2=10. If the result is a rational number, it may be rounded down.

Finally, the multiplication factor may e.g. be 5. Then the loop counter will be initialized with (100+20)*5=600. The loop counter will not use integer overflows and may be chosen with an accordingly large value range.

As already shown above, the loop counter may have the value of the sum of the input message size (InpSize) and the output buffer size (OutSize) multiplied by 5. However, the value of the multiplication factor may be modified. If the value is decreased, less CPU time will be spent but it will cause similar inputs to generate similar outputs or hash values. In the opposite case, it may be possible to generate an output that is less likely to coincide with another output or hash. However, the computation will require more CPU time.

In an embodiment, the predefined arbitrary number may be determined based on the input message.

If the predefined arbitrary number is determined based on the input message, different input messages will provide different predefined arbitrary numbers. This will increase the security level of the algorithm.

The predefined arbitrary number may e.g. be calculated as a cross sum or simply a sum of the values in the input message.

In an embodiment, preloading may comprise iterating over the output buffer starting with the second element of the output buffer and initializing in every iteration step the respective element of the output buffer based on the iteration step and the content of the element of the output buffer that is before the element of the output buffer treated in the respective iteration.

It is understood that for the first iteration step, the element of the prior iteration step is the first element of the output buffer.

The iterating and initializing may e.g. comprise assigning the respective element the value of the prior element plus the number of the iteration step. After this first calculation a factor may be added to the value of the respective element. The factor may be e.g. large enough to cause integer overflows for a plurality of elements.

If for example the predefined arbitrary number is 55, in the first iteration step, the second element of the output buffer will be initialized with 55+1 = 56. If the factor is e.g. 110, at the end of the iteration the second element of the output buffer will be loaded with the value 166.

In the second iteration step, the third element of the output buffer will be loaded with 166+2=168. Then 110 is added to 168, resulting in 110+168=278. The elements of the output buffer may e.g. be 8-bit variables that may only hold values between 0 and 255. Therefore, the first integer overflow is already caused in the second iteration step. The third element of the output buffer will therefore be loaded with 278-255=23.

It is understood that other values than 55 for the predefined arbitrary number and other values than 110 for the factor may be chosen according to specific application requirements.

In an embodiment, calculating may comprise performing calculations over the unique number variable and the input message and the output buffer with themselves in a loop that is repeated a number of times as indicated by the loop counter.

The loop is the main function of the computer implemented method and the actual calculation of the hash value is performed in the loop. After the loop finishes, the output buffer will hold the hash value. As explained above, the number of times that the loop is repeated may be tuned regarding the security level and the required computational effort.

In an embodiment, performing calculations may comprise assigning the unique number variable its value multiplied by the sum of the element of the input message at the position indicated by the input position pointer and the element of the output buffer at the position indicated by the output position pointer and assigning the unique number variable its value plus its value divided by 256.

The unique number variable may e.g. be named UniNum. The input message may be an array named Inp[]. The output buffer may be an array named Out[]. The input position pointer may be named InpPos and the output position pointer may be named OutPos.

In pseudo code, the above calculation may therefore be written as:

$$UniNum = UniNum * (Inp[InpPos] + Out[OutPos]);$$

$$UniNum = UniNum + (UniNum / 256);$$

In another embodiment, performing calculations may further comprise assigning the output buffer at the position indicated by the output position pointer the sum of its value and the unique number variable.

In pseudo code, the above calculation may therefore be written as:

$$Out[OutPos] = Out[OutPos] + UniNum;$$

In an embodiment, performing calculations may further comprise increasing the value of the input position pointer by one and increasing the value of the output position pointer by one.

In pseudo code, the above calculation may therefore be written as:

$$InpPos = InpPos + 1;$$

$$OutPos = OutPos + 1;$$

In another embodiment, performing calculations may further comprise comparing the value of the output position pointer with the size of the output buffer and setting the value of the output position pointer to zero if the value of the output position pointer is equal or larger than the size of the output buffer.

As indicated above, the output position pointer is not initialized with zero at the beginning of the loop. Therefore, the output position pointer is reset when it reaches the end of the output buffer and jumps back to the beginning of the output buffer.

In an embodiment, performing calculations may further comprise comparing the value of the input position pointer with the size of the input message and setting the value of the input position pointer to zero if the value of the input position pointer is equal or larger than the size of the input message.

As indicated above, the input position pointer is not initialized with zero at the beginning of the loop. Therefore, the input position pointer is reset when it reaches the end of the input message and jumps back to the beginning of the input message.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1 shows a flow diagram of an embodiment of a method according to the present invention;

Fig. 2 shows a flow diagram of an embodiment of the step of preloading according to the present invention;

Fig. 3 shows a flow diagram of an embodiment of the step of calculating according to the present invention; and

Fig. 4 shows a block diagram of an embodiment of a computer system according to the present invention.

In the figures like reference signs denote like elements unless stated otherwise.

## DETAILED DESCRIPTION OF THE DRAWINGS

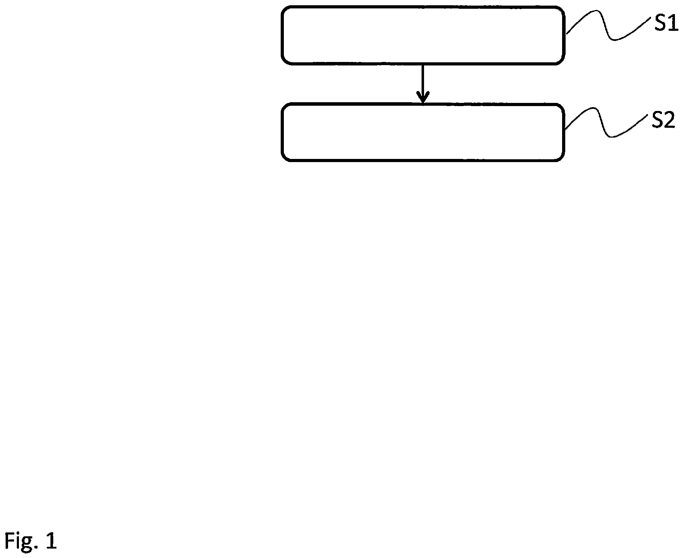

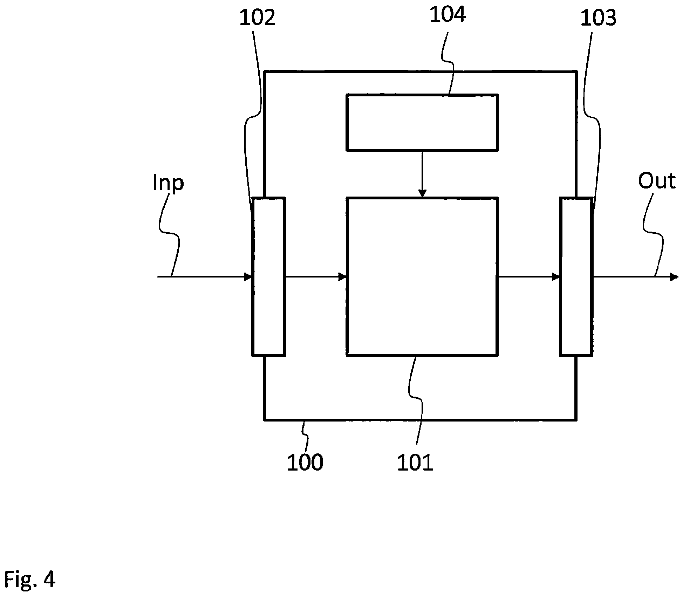

For ease of understanding the reference signs used in the description of the apparatus-based Fig. 4 will also be used in the description of the method based Figs. 1 - 3 and vice versa.

Fig. 1 shows a flow diagram of an embodiment of a computer implemented method for determining a hash value for an input message Inp in an electronic system 100.

The method comprises preloading S1 at least one computation variable Out, UniNum, InPos, OutPos, LoCo for the computation of the hash value based on a predefined arbitrary number. The computation variables Out, UniNum, InPos, OutPos, LoCo refer to variables that are used in the computer implemented method to perform internal or intermediate calculations on the way to compute the final result or output hash.

The output bugger variable Out may e.g. be an array that holds the output, i.e. the hash value, after all computations are finished. The unique number variable UniNum may be an intermediate variable that holds a unique number. The input position pointer InPos may be a pointer to a specific field or element of the input message Inp. The output position pointer outPos may be a pointer to a specific field or element of the output buffer Out. Finally, the loop counter variable LoCo may define the number of time that the main loop of step S2 is repeated.

The computer implemented method further comprises calculating S2 the hash value for the input message Inp based on integer overflows caused by computations over the input message Inp and the at least one preloaded computation variable Out, UniNum, InPos, OutPos, LoCo.

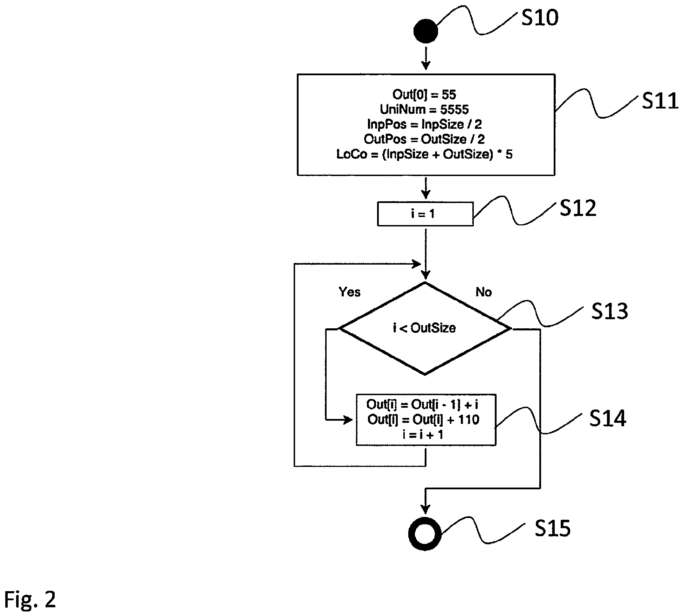

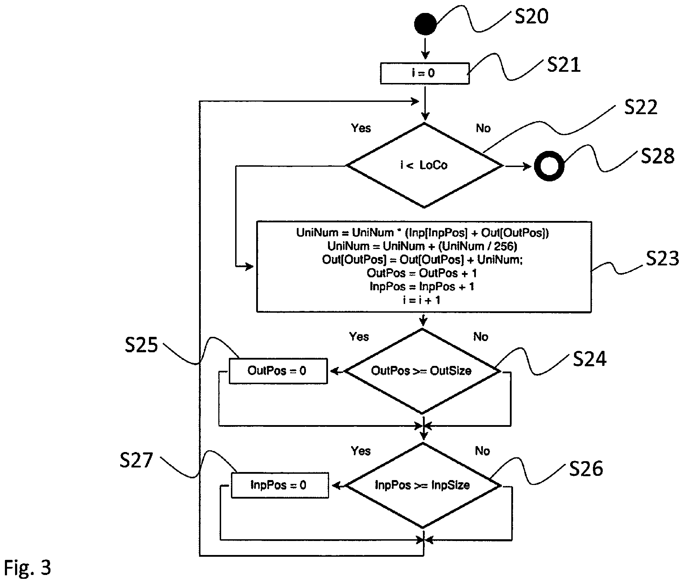

The details of the step of preloading and the step of calculating will be explained below with reference to Figs. 2 and 3.

Fig. 2 shows a flow diagram of the step of preloading S1. Preloading S1 starts at S10.

In step S11 a plurality of initializations are performed. For example, a first element of an output buffer Out for the hash value is initialized with the predefined arbitrary number, in this case 55. Further, a unique number variable UniNum is initialized with a unique number, in this case 5555. It is understood that the predefined arbitrary number and the unique number variable UniNum may be arbitrarily chosen and may be greater than zero.

In addition, an input position pointer InpPos is initialized with a value that is half the size of the input message Inp. The output position pointer OutPos is initialized with a value that is half the size of the output buffer Out. The loop counter LoCo is initialized with the summed value of the size of the input message Inp and size of the output buffer Out multiplied by a multiplication factor.

The above may be expressed in pseudo code as follows:

$$Out[0] = 55;$$

$$UniNum = 5555;$$

$$InpPos = InpSize / 2;$$

$$OutPos = OutSize / 2;$$

$$LoCo = (InpSize + OutSize) * 5;$$

In step S12, a temporary counter i is initialized with the value 1. In step S13 the method comprises verifying if i is smaller than the size of the output buffer OutSize. If i is smaller than the size of the output buffer OutSize, the element Out[i] of the output buffer Out is modified in step S14. Otherwise, the step S1 of preloading ends at S15.

The step S14 comprises iterating over the output buffer Out starting with the second element Out[1] of the output buffer Out and initializing in every iteration step the respective element Out[i] of the output buffer Out based on the iteration step i and the content of the element Out[i-1] of the output buffer Out that is before the element Out[i] of the output buffer Out treated in the respective iteration. This may e.g. include initializing Out[i] with the value of Out[i-1] + i and then adding a constant but arbitrarily chosen value, like e.g. 110 to Out[i]. After that i is incremented by one. After this has been performed for all elements of the output buffer Out, the method continues with step S2.

Fig. 3 shows a flow diagram of the step of calculating S2. Calculating starts at S20. In step S21 a temporary variable i is initialized with 0. In step S22 it is verified if i is smaller than the loop counter LoCo. If so, in step S23 various calculations are performed over the unique number variable UniNum, the input message Inp and the output buffer Out with themselves in a loop. The loop is repeated a number of times as indicated by the loop counter LoCo and i serves to count the loop iterations.

In step S23 the unique number variable UniNum is assigned with its value multiplied by the sum of the element Inp[InpPos] of the input message Inp at the position indicated by the input position pointer InpPos and the element Out[OutPos] of the output buffer Out at the position indicated by the output position pointer OutPos. After this, the unique number variable UniNum is assigned its value plus its value divided by 256.

The above may be expressed in pseudo code as follows:

$$UniNum = UniNum * (Inp[InpPos] + Out[OutPos]);$$

$$UniNum = UniNum + (UniNum / 256);$$

Then the output buffer Out is assigned at the position indicated by the output position pointer OutPos the sum of its value and the unique number variable UniNum:

$$\text{Out[OutPos]} = \text{Out[OutPos]} + \text{UniNum};$$

Finally, the value of the input position pointer InpPos, the value of the output position pointer OutPos and the temporary variable i are incremented by one:

$$\text{OutPos} = \text{OutPos} + 1;$$

$$\text{InPos} = \text{InPos} + 1;$$

$$i = i + 1;$$

After these calculations are performed, the value of the output position pointer OutPos is compared S24 with the size of the output buffer Out. If the value of the output position pointer OutPos is equal or larger than the size of the output buffer Out the value of the output position pointer OutPos is set S25 to zero. Analogously, the value of the input position pointer InpPos is compared S26 with the size of the input message Inp. If the value of the input position pointer InpPos is equal or larger than the size of the input message Inp the value of the input position pointer InpPos is set S27 to zero.

If in step S22 the temporary variable i is larger than the loop counter LoCo, the method ends at step S28.

As a result of the method execution, a hash value will be provided in the output buffer Out.

Fig. 4 shows a block diagram of an embodiment of a computer system 100. The computer system comprises a processor 101 that is configured to perform the method of the present invention. As options the computer system 100 further comprises an input interface 102, an output interface 103 and a memory 104.

The processor 101 may e.g. receive an input message Inp via the input interface 102. Such an input interface 102 may e.g. be a user interface that allows a user inputting a password. The processor may then calculate the hash Out for the input message Inp and e.g. provide the hash Out via the output interface 103. As an alternative, the processor 101 may compare the hash with a stored hash value that may e.g. be stored in the memory 104. The memory may e. g. also store instructions for the processor 101 that cause the processor 101 to perform the method of the present invention.

It is understood, that the computer system 100 of Fig. 1 may be any type of computer system, like e.g. a home computer, a server that is accessible via a data network, like the internet or the like.

Possible implementations of the computer system also include network enabled devices with low computational power, like e.g. Internet-of-Things devices. Such devices may e.g. include entertainment and household electronic devices, sensors and actuators, and the like.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a computer implemented method for determining a hash value for an input message (Inp) in an electronic system, the computer implemented method comprising preloading (S1) at least one computation variable (Out, UniNum, InPos, OutPos, LoCo) for the computation of the hash value based on a predefined arbitrary number, and calculating (S2) the hash value for the input message (Inp) based on integer overflows caused by computations over the input message (Inp) and the at least one preloaded computation variable (Out, UniNum, InPos, OutPos, LoCo).

**List of reference signs**

| Out, UniNum, InPos, OutPos, LoCo | computation variable |
| Inp | input message |
| InpSize | input message size |
| OutSize | output buffer size |
| i | counter |

| 100 | computer system |
| 101 | processor |
| 102 | input interface |
| 103 | output interface |
| 104 | memory |

| S1, S2 | method steps |
| S10 - S15 | method steps |
| S20 - S28 | method steps |

**Claims**

1. Computer implemented method for determining a hash value for an input message (Inp) in an electronic system, the computer implemented method comprising:

   preloading (S1) at least one computation variable (Out, UniNum, InPos, OutPos, LoCo) for the computation of the hash value based on a predefined arbitrary number; and

   calculating (S2) the hash value for the input message (Inp) based on integer overflows caused by computations over the input message (Inp) and the at least one preloaded computation variable (Out, UniNum, InPos, OutPos, LoCo),

   wherein preloading (S1) comprises initializing a first element of an output buffer (Out) for the hash value with the predefined arbitrary number and initializing the further elements of the output buffer (Out) based on the value of the first element of the output buffer (Out) and initializing a unique number variable (UniNum) with a unique number,

   wherein preloading (S1) comprises initializing an input position pointer (InpPos) with half the size of the input message (Inp) and initializing an output position pointer (OutPos) with half the size of the output buffer (Out) and initializing a loop counter (LoCo) with the summed value of the size of the input message (Inp) and size of the output buffer (Out) multiplied by a multiplication factor,

   wherein calculating (S2) comprises performing calculations (S23) over the unique number variable (UniNum) and the input message (Inp) and the output buffer (Out) with themselves in a loop that is repeated a number of times as indicated by the loop counter (LoCo), and

   wherein performing calculations (S23) comprises assigning the unique number variable (UniNum) its value multiplied by the sum of the element of the input message (Inp) at the position indicated by the input position pointer (InpPos) and the element of the output buffer (Out) at the position indicated by the output position pointer (OutPos) and assigning the unique number variable (UniNum) its value plus its value divided by 256.

2. Computer implemented method according to claim 1, wherein the predefined arbitrary number is determined based on the input message (Inp).

3. Computer implemented method according to any one of claims 1 and 2, wherein preloading (S1) comprises iterating over the output buffer (Out) starting with the second element of the output buffer (Out) and initializing in every iteration step the respective element of the output buffer (Out) based on the iteration step and the content of the element of the output buffer (Out) that is before the element of the output buffer (Out) treated in the respective iteration.

4. Computer implemented method according to claim 1, wherein performing calculations (S23) further comprises assigning the output buffer (Out) at the position indicated by the output position pointer (OutPos) the sum of its value and the unique number variable (UniNum).

5. Computer implemented method according to claim 4, wherein performing calculations (S23) further comprises increasing the value of the input position pointer (InpPos) by one and increasing the value of the output position pointer (OutPos) by one.

6. Computer implemented method according to claim 5, wherein calculating (S2) further comprises comparing (S24) the value of the output position pointer (OutPos) with the size of the output buffer (Out) and setting (S25) the value of the output position pointer (OutPos) to zero if the value of the output position pointer (OutPos) is equal or larger than the size of the output buffer (Out).

7. Computer implemented method according to any one of claims 5 and 6, wherein calculating (S2) further comprises comparing (S26) the value of the input position pointer (InpPos) with the size of the input message (Inp) and setting (S27) the value of the input position pointer (InpPos) to zero if the value of the input position pointer (InpPos) is equal or larger than the size of the input message (Inp).

8. Computer system (100) comprising a processor (101) configured to perform a computer implemented method according to any one of preceding claims.

9. Computer readable computer program product comprising instructions that when executed by a processor (101) cause the processor to perform a computer implemented method according to any one of the preceding claims 1 to 7.

**Patentansprüche**

1. Computerimplementiertes Verfahren zum Bestimmen eines Hash-Wertes für eine Eingangsnachricht (Inp) in einem elektronischen System, wobei das computerimplementierte Verfahren aufweist:

   Vorladen (S1) mindestens einer Berechnungsvariablen (Out, UniNum, InPos, OutPos, OutPos, LoCo) zur Berechnung des Hash-Wertes basierend auf einer vorgegebenen zufälligen Zahl; und
   Berechnen (S2) des Hash-Wertes für die Eingangsnachricht (Inp) basierend auf Integer-Überläufen, die durch Berechnungen über die Eingangsnachricht (Inp) und die mindestens eine vorgeladene Berechnungsvariable (Out, UniNum, InPos, OutPos, OutPos, LoCo) verursacht werden,
   wobei das Vorladen (S1) das Initialisieren eines ersten Elements eines Ausgabepuffers (Out) für den Hash-Wert mit der vordefinierten zufälligen Zahl und das Initialisieren der weiteren Elemente des Ausgabepuffers (Out) basierend auf dem Wert des ersten Elements des Ausgabepuffers (Out) und das Initialisieren einer einzigartigen Zahlenvariablen (UniNum) mit einer eindeutigen Zahl aufweist,
   wobei das Vorladen (S1) das Initialisieren eines Eingangspositionspointers (InpPos) mit der halben Größe der Eingangsnachricht (Inp) und das Initialisieren eines Ausgangspositionspointers (OutPos) mit der halben Größe des Ausgangspuffers (Out) und das Initialisieren eines Schleifenzählers (LoCo) mit dem summierten Wert der Größe der Eingangsnachricht (Inp) und der Größe des Ausgangspuffers (Out) multipliziert mit einem Multiplikationsfaktor aufweist,
   wobei das Berechnen (S2) das Durchführen von Berechnungen (S23) über die eindeutige Zahlenvariable (UniNum) und die Eingangsnachricht (Inp) und den Ausgangspuffer (Out) mit sich selbst in einer Schleife aufweist, die mehrmals wiederholt wird, wie durch den Schleifenzähler (LoCo) angezeigt, und
   wobei das Durchführen von Berechnungen (S23) das Zuweisen zu der eindeutigen Zahlenvariablen (UniNum) ihres Wertes multipliziert mit der Summe des Elements der Eingangsnachricht (Inp) an der durch den Eingangspositionspointer (InpPos) angegebenen Position und des Elements des Ausgangspuffers (Out) an der durch den Ausgangspositionspointer (OutPos) angegebenen Position und das Zuweisen des Wertes der eindeutigen Zahlenvariablen (UniNum) plus ihres durch 256 dividierten Wertes aufweist.

2. Computerimplementiertes Verfahren nach Anspruch 1, wobei die vordefinierte zufällige Zahl basierend auf der Eingangsnachricht (Inp) bestimmt wird.

3. Computerimplementiertes Verfahren nach einem der Ansprüche 1 und 2, wobei das Vorladen (S1) das Iterieren über den Ausgangspuffer (Out) beginnend mit dem zweiten Element des Ausgangspuffers (Out) und das Initialisieren des jeweiligen Elements des Ausgangspuffers (Out) in jedem Iterationsschritt basierend auf dem Iterationsschritt und dem Inhalt des Elements des Ausgangspuffers (Out), das vor dem Element des Ausgangspuffers (Out) liegt, das in der jeweiligen Iteration behandelt wird, aufweist.

4. Computerimplementiertes Verfahren nach Anspruch 1, wobei das Durchführen von Berechnungen (S23) ferner das Zuordnen des Ausgabepuffers (Out) an der durch den Ausgabepositionszeiger (OutPos) angezeigten Position, die Summe seines Wertes und der eindeutigen Zahlenvariablen (UniNum) aufweist.

**5.** Computerimplementiertes Verfahren nach Anspruch 4, wobei das Ausführen von Berechnungen (S23) ferner das Erhöhen des Wertes des Eingangspositionspointers (InpPos) um eins und das Erhöhen des Wertes des Ausgangspositionspointers (OutPos) um eins aufweist.

**6.** Computerimplementiertes Verfahren nach Anspruch 5, wobei das Berechnen (S2) ferner das Vergleichen (S24) des Wertes des Ausgangspositionspointers (OutPos) mit der Größe des Ausgangspuffers (Out) und das Einstellen (S25) des Wertes des Ausgangspositionspointers (OutPos) auf Null aufweist, wenn der Wert des Ausgangspositionspointers (OutPos) gleich oder größer als die Größe des Ausgangspuffers (Out) ist.

**7.** Computerimplementiertes Verfahren nach einem der Ansprüche 5 und 6, wobei das Berechnen (S2) ferner das Vergleichen (S26) des Wertes des Eingangspositionspointers (InpPos) mit der Größe der Eingangsnachricht (Inp) und das Setzen (S27) des Wertes des Eingangspositionspointers (InpPos) auf Null aufweist, wenn der Wert des Eingangspositionspointers (InpPos) gleich oder größer als die Größe der Eingangsnachricht (Inp) ist.

**8.** Computersystem (100), aufweisend einen Prozessor (101), der konfiguriert ist, um ein computerimplementiertes Verfahren gemäß einem der vorhergehenden Ansprüche durchzuführen.

**9.** Computerlesbares Computerprogrammprodukt, aufweisend Anweisungen, die, wenn sie von einem Prozessor (101) ausgeführt werden, den Prozessor veranlassen, ein computerimplementiertes Verfahren nach einem der vorhergehenden Ansprüche 1 bis 7 durchzuführen.

**Revendications**

**1.** Méthode mise en œuvre par ordinateur pour déterminer une valeur de hachage pour un message d'entrée (Inp) dans un système électronique, la méthode mise en œuvre par ordinateur comprenant :

le préchargement (S1) d'au moins une variable de calcul (Out, UniNum, InPos, OutPos, LoCo) pour le calcul de la valeur de hachage basée sur un nombre arbitraire prédéfini ; et
calcul (S2) de la valeur de hachage du message d'entrée (Inp) sur la base des débordements d'entiers causés par les calculs sur le message d'entrée (Inp) et sur au moins une variable de calcul préchargée (Out, UniNum, InPos, OutPos, LoCo),
dans lequel le préchargement (S1) comprend l'initialisation d'un premier élément d'un tampon de sortie (Out) pour la valeur de hachage avec le nombre arbitraire prédéfini et l'initialisation des autres éléments du tampon de sortie (Out) sur la base de la valeur du premier élément du tampon de sortie (Out) et l'initialisation d'une variable à nombre unique (UniNum) avec un nombre unique,
dans lequel le préchargement (S1) comprend l'initialisation d'un pointeur de position d'entrée (InpPos) avec la moitié de la taille du message d'entrée (Inp) et l'initialisation d'un pointeur de position de sortie (OutPos) avec la moitié de la taille du tampon de sortie (Out) et l'initialisation d'un compteur de boucle (LoCo) avec la valeur additionnée de la taille du message d'entrée (Inp) et de la taille du tampon de sortie (Out) multipliée par un facteur de multiplication,
où le calcul (S2) comprend l'exécution de calculs (S23) sur la variable de nombre unique (UniNum) et le message d'entrée (Inp) et le tampon de sortie (Out) avec eux-mêmes dans une boucle qui est répétée un certain nombre de fois comme indiqué par le compteur de boucle (LoCo), et
dans lequel l'exécution de calculs (S23) comprend l'attribution à la variable de nombre unique (UniNum) de sa valeur multipliée par la somme de l'élément du message d'entrée (Inp) à la position indiquée par le pointeur de position d'entrée (InpPos) et de l'élément du tampon de sortie (Out) à la position indiquée par le pointeur de position de sortie (OutPos) et l'attribution à la variable de nombre unique (UniNum) de sa valeur plus sa valeur divisée par 256.

**2.** Méthode mise en oeuvre par ordinateur selon la revendication 1, dans laquelle le nombre arbitraire prédéfini est déterminé sur la base du message d'entrée (Inp).

**3.** Méthode mise en oeuvre par ordinateur selon l'une quelconque des revendications 1 et 2, dans laquelle le préchargement (S1) comprend l'itération sur le tampon de sortie (Out) en commençant par le deuxième élément du tampon de sortie (Out) et l'initialisation dans chaque étape d'itération de l'élément respectif du tampon de sortie (Out) sur la base de l'étape d'itération et du contenu de l'élément du tampon de sortie (Out) qui est avant l'élément du tampon de sortie (Out) traité dans l'itération respective.

4. Méthode mise en oeuvre par ordinateur selon la revendication 1, dans laquelle l'exécution de calculs (S23) comprend en outre l'attribution au tampon de sortie (Out) à la position indiquée par le pointeur de position de sortie (OutPos) de la somme de sa valeur et de la variable de nombre unique (UniNum).

5. Méthode mise en oeuvre par ordinateur selon la revendication 4, dans laquelle l'exécution de calculs (S23) comprend en outre l'augmentation de la valeur du pointeur de position d'entrée (InpPos) de un et l'augmentation de la valeur du pointeur de position de sortie (OutPos) de un.

6. Méthode mise en oeuvre par ordinateur selon la revendication 5, dans laquelle le calcul (S2) comprend en outre la comparaison (S24) de la valeur du pointeur de position de sortie (OutPos) avec la taille du tampon de sortie (Out) et la mise à zéro (S25) de la valeur du pointeur de position de sortie (OutPos) si la valeur du pointeur de position de sortie (OutPos) est égale ou supérieure à la taille du tampon de sortie (Out).

7. Méthode mise en oeuvre par ordinateur selon l'une quelconque des revendications 5 et 6, dans laquelle le calcul (S2) comprend en outre la comparaison (S26) de la valeur du pointeur de position d'entrée (InpPos) avec la taille du message d'entrée (Inp) et la mise à zéro (S27) de la valeur du pointeur de position d'entrée (InpPos) si la valeur du pointeur de position d'entrée (InpPos) est égale ou supérieure à la taille du message d'entrée (Inp).

8. Système informatique (100) comprenant un processeur (101) configuré pour exécuter une méthode mise en oeuvre par ordinateur selon l'une quelconque des revendications précédentes.

9. Produit de programme informatique lisible par ordinateur comprenant des instructions qui, lorsqu'elles sont exécutées par un processeur (101), amènent le processeur à exécuter une méthode mise en oeuvre par ordinateur conformément à l'une quelconque des revendications précédentes 1 à 7.

Fig. 1

S10

Out[0] = 55
UniNum = 5555
InpPos = InpSize / 2
OutPos = OutSize / 2
LoCo = (InpSize + OutSize) * 5

S11

i = 1

S12

Yes

No

i < OutSize

S13

Out[i] = Out[i - 1] + i
Out[i] = Out[i] + 110
i = i + 1

S14

S15

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1504337 B1

- US 20020051537 A1

**Non-patent literature cited in the description**

- of the Handbook of applied cryptography discloses the MD4 has algorithm. **JIAN GUO.** The PHOTON family of lightweight hash functions

- **AUMASSON JEAN-PHILLIPE.** *Quark: A Lightweight Hash*